# EUROPÄISCHE PATENTSCHRIFT

(11) **EP 0 496 103 B1**
(45) Veröffentlichungstag und Bekanntmachung des Hinweises auf die Patenterteilung: **26.03.1997**
(21) Anmeldenummer: 91122087.9
(22) Anmeldetag: 22.12.1991
(51) Int. Cl.: F16K 21/00, F16L 27/08

(54) **Sanitärarmatur mit Schwenkauslauf**
Sanitary valve with swivelling spout
Soupape sanitaire avec sortie orientable

(30) Priorität: 25.01.1991 DE 4102133
(43) Veröffentlichungstag der Anmeldung: 29.07.1992
(73) Patentinhaber: HANSA METALLWERKE AG, D-70567 Stuttgart (DE)
(72) Erfinder: Cordes, Dieter, W-4054 Nettetal 1 (DE); Marks, Felix, W-7447 Aichtal-Grötzingen (DE)
(74) Vertreter: Ostertag, Ulrich

(56) Entgegenhaltungen:
- DE-A- 2 629 795
- DE-A- 3 815 492
- DE-C- 2 948 474

## Beschreibung

Die Erfindung betrifft eine Sanitärarmatur mit Schwenkauslauf mit
a) einem Armaturengehäuse, auf welches der Schwenkauslauf verschwenkbar aufsteckbar ist;
b) mindestens einem als Radiallager dienenden Führungsring zwischen dem Schwenkauslauf und dem Armaturengehäuse bzw. einem mit diesem verbundenen Teil;
c) einer Einrichtung an dem Führungsring, welche zur spielfreien Radiallagerung des Schwenkauslaufes unterschiedliche Toleranzen auszugleichen vermag.
   Eine derartige Sanitärarmatur ist aus der DE-PS 29 48 474 bekannt. Die Radiallagerung des in das Armaturengehäuse einsteckbaren Schwenkauslaufes wird hier von zwei Führungsringen besorgt, die in axialem Abstand voneinander angeordnet sind. Damit diese Lagerung spielfrei ist, ist jeder Führungsring mit aufspreizbaren, elastischen Federsegmenten gestaltet, die beim Einschieben des Schwenkauslaufes in die Aufnahme des Armaturengehäuses elastisch komprimiert werden. Diese elastischen Federsegmente entspannen sich beim Herausziehen des Schwenkauslaufes wieder. Derartige elastische Federsegmente aufweisende Führungsringe sind jedoch verhältnismäßig komplizierte Bauteile.
   Aufgabe der vorliegenden Erfindung ist es, eine Sanitärarmatur der eingangs genannten Art so auszugestalten, daß die spielfreie Lagerung mit einfacheren Mitteln erzielt wird.
   Diese Aufgabe wird erfindungsgemäß dadurch gelöst, daß
d) die Einrichtung am Führungsring Materialerhebungen an einer Mantelfläche umfaßt, die beim Aufstecken des Schwenkauslaufes plastisch, nicht elastisch, deformierbar sind.

Erfindungsgemäß werden also zum Toleranzausgleich keine elastischen Federelemente sondern plastisch deformierbare Materialbereiche eingesetzt, die praktisch kostenfrei bei der Herstellung der Führungsringe mit angeformt werden können. Erfindungsgemäße Führungsringe sind also nicht teurer als konventionelle Radiallagerringe mit glatten, konzentrischen Mantelflächen.

Die Materialerhebungen können axial verlaufende Rippen sein; es kann sich alternativ hierbei auch um diskrete Noppen handeln.

Besonders vorteilhaft ist eine Ausgestaltung der Erfindung, bei welcher ein Materialerhebungen tragender Führungsring gleichzeitig als Anschlagring zur Begrenzung des Schwenkwinkels des Schwenkauslaufes ausgebildet ist. Dadurch, daß der Führungsring nunmehr auch eine zweite Aufgabe, nämlich diejenige der Begrenzung des Schwenkwinkels, übernimmt, wird die Anzahl der insgesamt erforderlichen Bauelemente an der Sanitärarmatur kleingehalten. Die spielfreie Lagerung des Schwenkauslaufes an dem Führungsring, die mit der vorliegenden Erfindung erzielt wird, kommt auf diese Weise auch der Schwenkwinkelbegrenzung zugute.

Die Vorteile der erfindungsgemäßen Ausgestaltung einer Sanitärarmatur kommen besonders dann zur Geltung, wenn in axialem Abstand voneinander zwei oder mehr Führungsringe mit Materialerhebungen an einer Mantelfläche vorgesehen sind.

Ein Ausführungsbeispiel der Erfindung wird nachfolgend anhand der Zeichnung näher erläutert; es zeigen
- Figur 1:: einen axialen Teilschnitt durch eine Sanitärarmatur mit Schwenkauslauf;
- Figur 2:: die Seitenansicht der Auslauf-Aufnahme der in Figur 1 dargestellten Sanitärarmatur, in der rechten Hälfte geschnitten;
- Figur 3:: einen Schnitt gemäß Linie III-III von Figur 2;
- Figur 4:: die Draufsicht auf einen Anschlagring der in Figur 1 dargestellten Sanitärarmatur;
- Figur 5:: einen Schnitt gemäß Linie V-V von Figur 4;
- Figur 6:: die Seitenansicht eines Anschlagstückes aus der Sanitärarmatur von Figur 1;
- Figur 7:: die Draufsicht auf das Anschlagstück von Figur 6;
- Figur 8:: einen Schnitt gemäß Linie VIII-VIII von Figur 1.

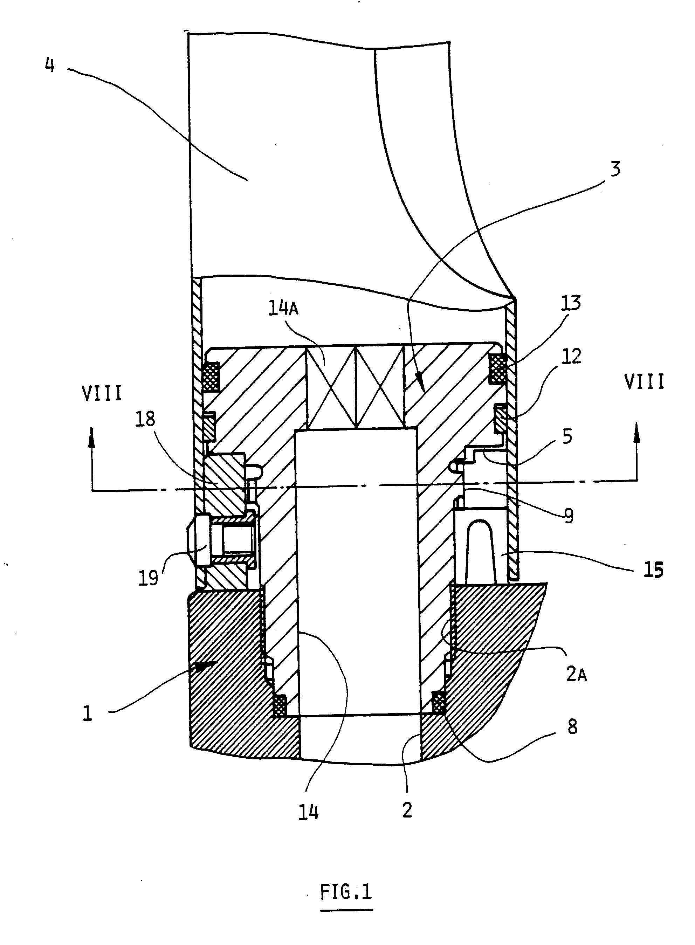

In Figur 1 ist das obere Ende des Armaturengehäuses einer Sanitärarmatur mit dem Bezugszeichen 1 gekennzeichnet. Der genauere Aufbau dieser Sanitärarmatur ist im vorliegenden Zusammenhang ohne Bedeutung. Insbesondere kommt es also nicht darauf an, ob das ausfließende Wasser Mischwasser oder reines Kalt- bzw. Warmwasser ist; ebenso ist es irrelevant, ob die Sanitärarmatur die steuernden Absperrelemente selbst enthält oder ob es sich um einen reinen Armaturenauslauf handelt.

Das Armaturengehäuse 1 wird von einem axialen Wasserkanal 2 durchsetzt, der sich im oberen Bereich zu einer Gewindeöffnung 2a erweitert. In die Gewindeöffnung 2a ist von oben eine Aufnahme 3 eingeschraubt, an welcher in weiter unten beschriebener Weise ein Schwenkauslauf 4 verschwenkbar befestigt ist.

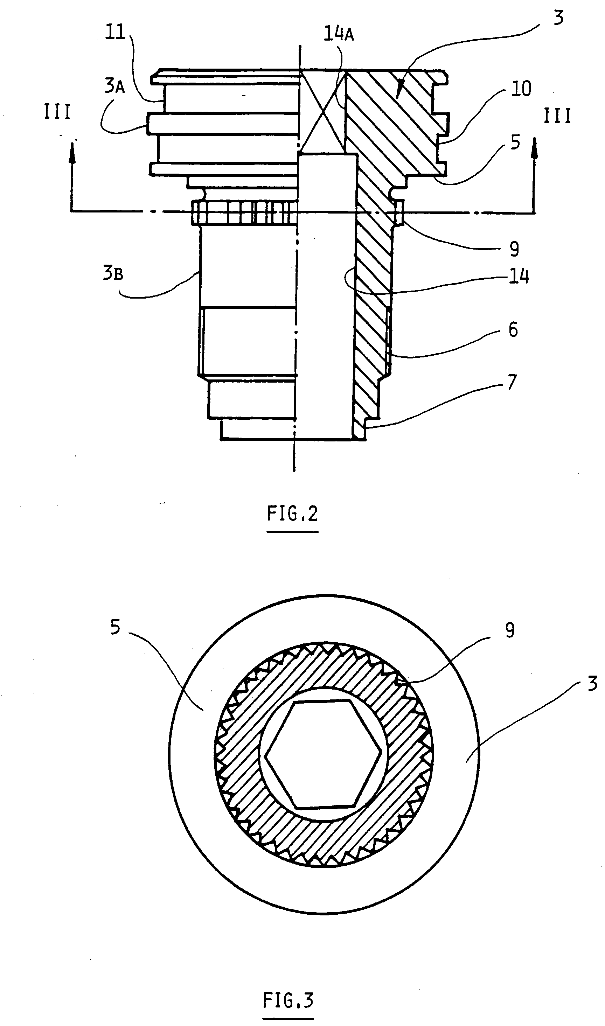

Die Aufnahme 3 ist in den Figuren 2 und 3 isoliert dargestellt. Hierauf wird zunächst Bezug genommen.

Die Aufnahme 3 läßt sich grob in einen oberen Bereich größeren Durchmessers 3a und einen unteren Bereich kleineren Durchmessers 3b unterteilen, an deren Übergang eine nach unten zeigende Ringschulter 5 gebildet ist. Der untere Bereich 3b kleineren Durchmessers trägt das Einschraubgewinde 6, welches mit der Gewindeöffnung 2a des Armaturengehäuses 1 zusammenwirkt. An untersten Ende der Aufnahme 3 befindet sich eine Stufe 7, in welche (vergl. Figur 1) ein O-Ring 8 eingelegt ist, welcher der Abdichtung zwischen der Aufnahme 3 und dem Armaturengehäuse 1 dient.

Oberhalb des Einschraubgewindes 6, in der Nähe der Ringschulter 5, trägt der untere Bereich 3b der Aufnahme 3 eine Verzahnung 9, auf deren Sinn weiter unten eingegangen wird.

Der obere Bereich 3a größeren Durchmessers der Aufnahme 3 ist mit zwei Nuten 10, 11 versehen. Die untere Nut 10 nimmt einen Führungsring 12 (vergl. Figur 1) auf, während in der oberen Nut 11 ein O-Ring 13 (ebenfalls in Figur 1 zu erkennen) einliegt.

Die gesamte Aufnahme 3 wird von einem Kanal 14 durchzogen, welcher den Wasserkanal 2 im Armaturengehäuse 1 fortsetzt und im oberen Bereich als Mehrkantbereich 14a ausgebildet ist. An dem Mehrkantbereich 14a des Kanals 14 kann beim Eindrehen der Aufnahme 3 in das Armaturengehäuse 1 ein entsprechend geformtes Werkzeug ansetzen.

Der Schwenkauslauf 4 wird, wie in Figur 1 gezeigt, über die in das Armaturengehäuse 1 eingedrehte Aufnahme 3 so geschoben, daß die innere Mantelfläche seiner Wand sowohl an dem O-Ring 13 als auch an dem Führungsring 12 anliegt.

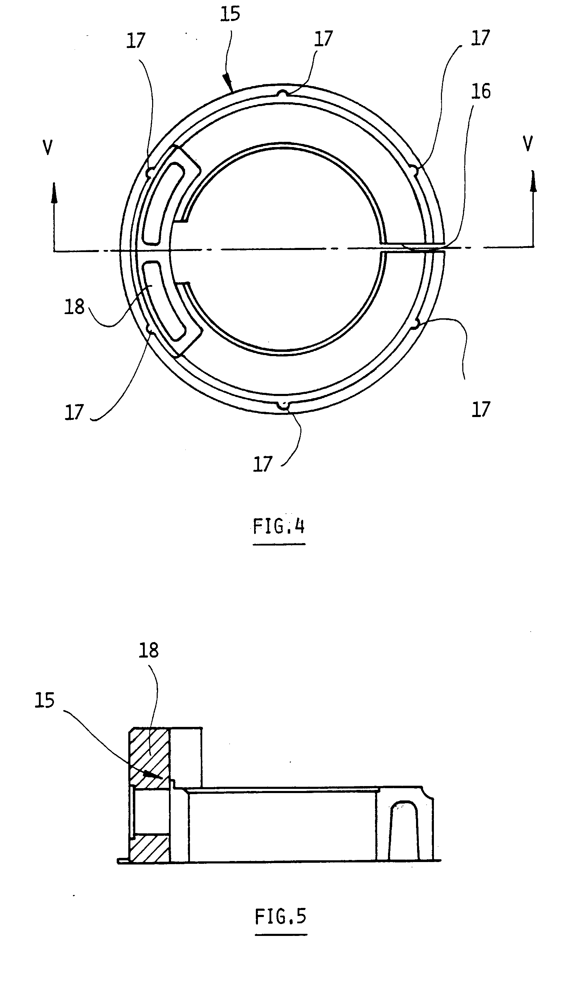

In dem Ringraum, der sich zwischen dem unteren Bereich des Schwenkauslaufes 4 und dem Bereich 3b engeren Durchmessers der Aufnahme 3 unterhalb der Ringschulter 5 ergibt, ist ein Anschlagring 15 eingesetzt, welcher in noch zu beschreibender Weise mehreren Funktionen dient. Der Anschlagring 15 ist in den Figuren 4 und 5 näher dargestellt, auf welche nunmehr Bezug genommen wird.

Der Anschlagring 15 ist, wie insbesondere der Figur 4 zu entnehmen ist, bei 16 geschlitzt, so daß er sich elastisch federnd gegen den Bereich 3b der Aufnahme 3 anlegen kann. Auf der äußeren Mantelfläche trägt er in regelmäßigen Abständen radial vorstehende, achsparallele Rippen 17. Dabei handelt es sich um Materialbereiche, die plastisch verformt, nämlich zusammengedrückt werden, wenn die Innenmantelfläche des Schwenkauslaufes 4 über sie geschoben wird. Die Rippen 17 dienen so zum Toleranzausgleich zwischen dem Innenmaß des Schwenkauslaufes 4 und dem Anschlagring 15.

Der Anschlagring 15 ist in einem bestimmten Winkelbereich mit einem bogenförmigen, axial überstehenden Anschlagvorsprung 18 ausgebildet, der mit seiner oberen Stirnfläche an der Ringschulter 5 und mit dem oberen Ende seiner inneren Mantelfläche an einer äußeren zylindrischen Mantelfläche der Aufnahme 3 anliegt. Auf diese Weise stellt der Anschlagring 15 eine spielfreie Radiallagerung und Axialsicherung des Schwenkauslaufes 4 an der Aufnahme 3 sicher. Er wird dabei von dem Führungsring 12 unterstützt, an dessen äußerer Mantelfläche ähnliche plastisch verformbare Rippen vorgesehen sind, wie sie oben mit dem Bezugszeichen 17 an dem Anschlagring 15 bereits beschrieben wurden.

Wie Figur 1 zeigt, ist der über die Aufnahme 3 gestülpte Schwenkauslauf 4 mittels einer Schraube 19 an dem Anschlagring 15 befestigt.

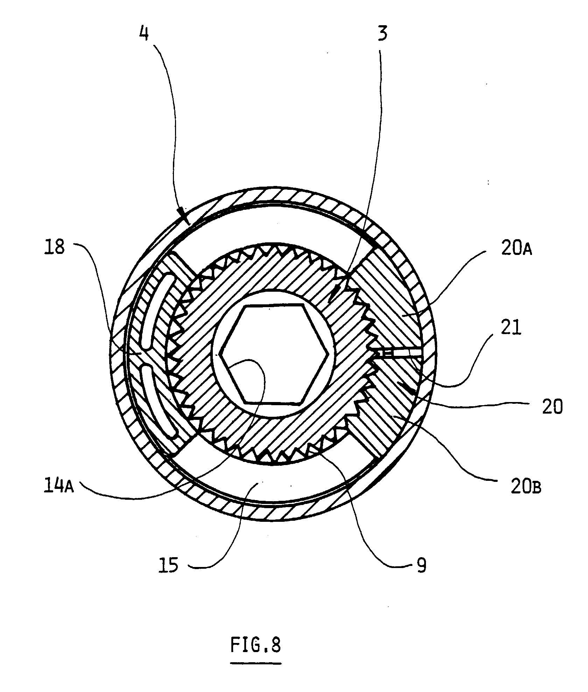

Der Anschlagring 15 übernimmt, wie sein Name sagt, neben der Lagerung und Halterung des Schwenkauslaufes 4 die Funktion einer Begrenzung des Drehwinkels des Schwenkauslaufes 4. Sein Anschlagvorsprung 18 wirkt hierbei als erstes Anschlagstück mit einem zweiten Anschlagstück 20 zusammen, welches in dem von dem Anschlagring 15, der Aufnahme 3 und der Innenmantelfläche des Schwenkauslaufes 4 begrenzten Ringraum auf der Verzahnung 9 aufgesteckt ist. Die räumlichen Verhältnisse werden insbesondere bei der Betrachtung der Figuren 1 und 8 deutlich.

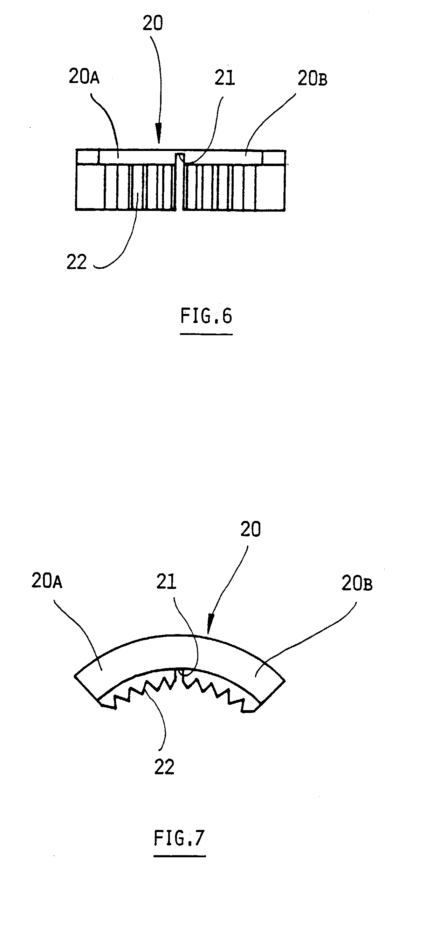

Die Figuren 6 und 7 zeigen das Anschlagstück 20 für sich. Diesen Figuren ist besonders deutlich zu entnehmen, daß das Anschlagstück 20 aus zwei Teilen 20a und 20b zusammengesetzt ist, die über eine Sollbruchstelle 21 miteinander verbunden sind. Das Anschlagstück 20 trägt an seiner Innenmantelfläche eine Verzahnung 22, welche zu der Außenverzahnung 9 an der Aufnahme 3 komplementär ist.

Die Art des Zusammenwirkens zwischen dem Anschlagvorsprung 18 des Anschlagringes 15 (der gemeinsam mit dem Schwenkauslauf 4 verdreht wird) und dem Anschlagstück 20 (welches unverdrehbar auf die Verzahnung 9 der Aufnahme 3 aufgesteckt ist) ist wie folgt:

Befinden sich die beiden Teile 20a und 20b des Anschlagstückes 20, wie in Figur 8 dargestellt, in unmittelbarer Nachbarschaft, ist insbesondere also die Sollbruchstelle 21 noch nicht gelöst, dann läßt sich der Schwenkauslauf 4 um den maximalen Schwenkwinkel verdrehen; die Schwenkbewegung findet ja dann ihr Ende, wenn der Anschlagvorsprung 18 des Anschlagringes 15 gegen eines der beiden Teile 20a oder 20b des Anschlagstückes 20 anstößt. Der maximale Schwenkwinkel des Schwenkauslaufes 4 errechnet sich dabei als Differenz zwischen 360° und der Summe der beiden Winkel, die von dem Anschlagstück 20 und dem Anschlagvorsprung 18 eingeschlossen werden.

Mit Hilfe des Anschlagstückes 20 kann aber der Schwenkauslauf 4 auch in jeder beliebigen Winkelposition unverdrehbar fixiert werden. Hierzu werden die beiden Teile 20a und 20b des Anschlagstückes 20 an der Sollbruchstelle 21 voneinander gelöst. Sie werden dann getrennt so auf die Verzahnung 9 der Aufnahme 3 aufgesteckt, daß sie den Anschlagvorsprung 18 in der richtigen Winkelposition und in unmittelbarer Anlage zwischen sich einschließen. Die Winkelbewegung des Anschlagvorsprunges 18 und damit des Schwenkauslaufes 4 ist dann in beiden Richtungen jeweils durch ein Teil 20a, 20b des Anschlagstückes 20 unterbunden.

Selbstverständlich läßt sich durch geeignete Wahl der Winkelposition, in welcher die Teile 20a oder 20b auf die Verzahnung 9 aufgesteckt werden, jeder denkbare Zwischenzustand zwischen einer vollständigen Fixierung des Schwenkauslaufes 4 und dessen maximaler Verdrehbarkeit wählen. Schwenkausläufe der hier interessierenden Art haben aus äußeren geometrischen Gründen, beispielsweise aufgrund der Gesamtarmatur, an der sie sich befinden, eine Mittelstellung. Durch die Zweiteilung des Anschlagstückes 20 ist es offensichtlich möglich, Drehwinkelbeschränkungen des Schwenkauslaufes 4 nicht nur symmetrisch zu dieser Mittelstellung sondern ganz nach Wunsch auch asymmetrisch vorzunehmen.

## Patentansprüche

1. Sanitärarmatur mit Schwenkauslauf mit
a) einem Armaturengehäuse, auf welches der Schwenkauslauf verschwenkbar aufsteckbar ist;
b) mindestens einem als Radiallager dienenden Führungsring zwischen dem Schwenkauslauf und dem Armaturengehäuse bzw. einem mit diesem verbundenen Teil;
c) einer Einrichtung an dem Führungsring, welche zur spielfreien Radiallagerung des Schwenkauslaufes unterschiedliche Toleranzen auszugleichen vermag,
dadurch gekennzeichnet, daß
d) die Einrichtung am Führungsring (15, 12) Materialerhebungen (17) an einer Mantelfläche umfasst, die beim Aufstecken des Schwenkauslaufes (4) plastisch, nicht elastisch, deformierbar sind.

2. Sanitärarmatur nach Anspruch 1, dadurch gekennzeichnet, daß die Materialerhebungen axial verlaufende Rippen (17) sind.

3. Sanitärarmatur nach Anspruch 1, dadurch gekennzeichnet, daß die Materialerhebungen diskrete Noppen sind.

4. Sanitärarmatur nach einem der vorhergehenden Ansprüche, dadurch gekennzeichnet, daß ein Materialerhebungen (17) tragender Führungsring (15) gleichzeitig als Anschlagring zur Begrenzung des Schwenkwinkels des Schwenkauslaufes (4) ausgebildet ist.

5. Sanitärarmatur nach einem der vorhergehenden Ansprüche, dadurch gekennzeichnet, daß in axialem Abstand voneinander zwei oder mehr Führungsringe (15, 12) mit Materialerhebungen (17) an einer Mantelfläche vorgesehen sind.

## Claims

1. Sanitary fitting having a swivelling outlet, comprising
a) a fitting housing on which the swivelling outlet can be mounted so as to swivel;
b) at least one guide ring, serving as a radial bearing, between the swivelling outlet and the fitting housing or a part connected thereto;
c) a device on the guide ring, which is able to compensate for different tolerances so that the swivelling outlet is radially supported without play,
characterised in that
d) the device on the guide ring (15, 12) comprises material elevations (17) on a circumferential surface which are plastically, non-resiliently, deformable upon mounting the swivelling outlet (4).

2. Sanitary fitting according to claim 1, characterised in that the material elevations are axial ribs (17).

3. Sanitary fitting according to claim 1, characterised in that the material elevations are discrete knobs.

4. Sanitary fitting according to any one of the preceding claims, characterised in that a guide ring (15) bearing material elevations (17) is at the same time constructed as a stop ring for limiting the angle of swivel of the swivelling outlet (4).

5. Sanitary fitting according to any one of the preceding claims, characterised in that two or more guide rings (15, 12) having material elevations (17) on a circumferential surface are provided axially spaced from one another.

## Revendications

1. Appareil de robinetterie sanitaire à sortie orientable, avec
a) un corps d'appareil de robinetterie, sur lequel la sortie orientable peut être emmanchée à pivotement,
b) au moins une bague de guidage, servant de palier radial, entre la sortie orientable et le corps d'appareil de robinetterie ou une pièce assemblée à ce dernier,
c) un moyen, sur la bague de guidage, qui permet de compenser des tolérances différentes en vue d'un montage sans jeu radial de la sortie orientable,
**caractérisé** en ce que
d) ledit moyen sur la bague de guidage (15, 12) comprend des surélévations de matière (17) sur une face d'enveloppe qui peuvent être déformées plastiquement, mais non élastiquement, lors de l'emmanchement de la sortie orientable (4).

2. Appareil de robinetterie sanitaire selon la revendication 1, **caractérisé** en ce que les surélévations de matière sont des nervures (17) s'étendant axialement.

3. Appareil de robinetterie sanitaire selon la revendication 1, **caractérisé** en ce que les surélévations de matière sont des noppes discrètes.

4. Appareil de robinetterie sanitaire selon l'une des revendications précédentes, **caractérisé** en ce qu'une bague de guidage (15) portant des surélévations de matière (17) est conçue en même temps comme bague de butée pour limiter l'angle de pivotement de la sortie orientable (4).

5. Appareil de robinetterie sanitaire selon l'une des revendications précédentes, **caractérisé** en ce que deux ou plusieurs bagues de guidage (15, 12) pourvues de surélévations de matière (17) sont prévues à distance axiale les unes des autres sur une face d'enveloppe.
